**Europäisches Patentamt**

**European Patent Office**

**Office européen des brevets**

(11) Veröffentlichungsnummer : **0 078 554**
**B1**

(12) # EUROPÄISCHE PATENTSCHRIFT

(45) Veröffentlichungstag der Patentschrift :
24.04.85

(51) Int. Cl.⁴ : **C 10 C   1/18, C 01 B 31/08**

(21) Anmeldenummer : **82200877.7**

(22) Anmeldetag : **12.07.82**

(54) **Verfahren zur Herstellung einer hochreaktiven Pechfraktion und deren Verwendung.**

(30) Priorität : **29.10.81 DE 3142826**

(43) Veröffentlichungstag der Anmeldung :
**11.05.83 Patentblatt 83/19**

(45) Bekanntmachung des Hinweises auf die Patenterteilung : **24.04.85 Patentblatt 85/17**

(84) Benannte Vertragsstaaten :
**DE FR GB NL**

(56) Entgegenhaltungen :
**FR-A- 1 048 151**

(73) Patentinhaber : **Rütgerswerke Aktiengesellschaft
Mainzer Landstrasse 217
D-6000 Frankfurt a.Main 1 (DE)**

(72) Erfinder : **Palm, Jürgen, Dr.
Fritz-Reuter-Strasse 24
D-4353 Oer-Erkenschwick (DE)**
Erfinder : **Glaser, Herbert, DI.
Schürenkampstrasse 22
D-4390 Gladbeck (DE)**
Erfinder : **Collin, Gerd, Dr.
Hagensallee 56
D-4100 Duisburg (DE)**
Erfinder : **Marrett, Rolf, DI.
Eichenweg 17
D-4620 Castrop-Rauxel (DE)**
Erfinder : **Zander, Maximilian, Prof. Dr.
Friedenstrasse 9
D-4620 Castrop-Rauxel (DE)**

## Beschreibung

Die Erfindung betrifft ein Verfahren zur Herstellung hochreaktiver Pechfraktionen, die vor allem bei der kontinuierlichen Erzeugung von Kohlenstoff verwendet werden können.

Steinkohlenteernormalpech, der Destillationsrückstand der technischen Steinkohlenteerdestillation, wird hauptsächlich zur Erzeugung von hochanisotropem technischen Kohlenstoff verwendet. Bei der Elektrodenherstellung für die metallurgische Industrie werden z. B. die Folgeprodukte Elektrodenbindemittel und Pechkoks benötigt, ebenso in der übrigen Graphit- und Kunstkohleindustrie. Daneben werden aus Steinkohlenteerpechen auch hochwertige Werkstoffe wie Kohlenstoffasern gewonnen.

Ein Nachteil all dieser Verfahren zur Umwandlung von Steinkohlenteerpech in anisotropen Kohlenstoff ist die lange Verkokungszeit bei Temperaturen zwischen 450 und 550 °C. Dies gilt insbesondere für kontinuierliche Carbonisierungsprozesse, wie sie z. B. für die Herstellung von Kohlenstoffasern vorgeschlagen wurden.

Es ist bekannt, durch Verwendung geeigneter Katalysatoren und Additive wie z. B. Aluminiumchlorid und Schwefel die Verkokungstemperaturen zu senken und auch die Verkokungszeiten zu verkürzen. Die in dem Kohlenstoff verbleibenden Fremdstoffe führen jedoch zu veränderten Eigenschaften, die nur in wenigen Fällen akzeptiert werden können.

Es ist weiterhin bekannt, aus Pechextrakten hochanisotropen Koks herzustellen. Die bekannten Verfahren haben allerdings den Nachteil, daß bei niedrigen Verkokungstemperaturen unter 450 °C lange Verkokungszeiten benötigt werden. Außerdem ist die Fraktionierung von Steinkohlenteerpech unter Verwendung von Pikrinsäure als Analysenmethode beschrieben (Compendium 77/78, Ergänzungsband, Erdöl und Kohle, Erdgas, Petrochemie, S. 235-251).

Es bestand daher die Aufgabe, ein Verfahren zur Gewinnung einer hochreaktiven Pechfraktion zu entwickeln, die sehr schnell auch bei niedrigen Temperaturen in einen hochanisotropen Kohlenstoff umgewandelt werden kann und sich in hoher Ausbeute aus Steinkohlenteerpech gewinnen läßt.

Die Aufgabe wird dadurch gelöst, daß ein in Chloroform löslischer Steinkohlenteerpechextrakt mit 1-10 Gew.-% festem Jod 1 bis 3 Stunden unter Rühren bei Raumtemperatur behandelt wird, die festen Reaktionsprodukte abgetrennt und Gegenwart von Chloroform mit einer wäßrigen Ammoniaklösung zerlegt werden, und nach Abtrennen der wäßrigen Phase und Abdestillieren des Lösungsmittels in an sich bekannter Weise die hochreaktive Pechfraktion als Rückstand verbleibt.

Die durch Umsetzung mit Jod gewonnene Pechfraktion wird bei Temperaturen von 425 °C oder höher unter Drücken bis 10 bar in 1 bis 2 Stunden vorzugsweise kontinuierlich in hochanisotropen Kohlenstoff umgewandelt.

Das Lösungsmittel kann mehrfach für die Extraktion verwendet werden, bevor es destillativ aufgearbeitet werden muß. Der Destillationsrückstand ist frei von Aschen und festem Kohlenstoff und daher ein wertvoller Rohstoff, der als Imprägniermittel verwendet oder zu Bindemittel für Elektroden in bekannter Weise anstelle von ausgesuchten Normalpechen verarbeitet werden kann.

Die Erfindung wird an einem Beispiel näher erläutert. In einem Vergleichsbeispiel wird die Herstellung einer Pechfraktion unter Verwendung von Pikrinsäure beschrieben.

Beispiel

1 kg Steinkohlenteernormalpech mit einem Erweichungspunkt von 72 °C (nach Krämer-Sarnow) wird mit 10 kg siedendem Chloroform unter Rühren extrahiert. Die Lösung wird auf Raumtemperatur abgekühlt und das Unlösliche (206 g) abfiltriert. Dem in Chloroform gelösten Pech werden in einem Rührwerk bei Raumtemperatur 50 g Jod in fester Form portionsweise zugegeben. Nach zweistündiger Reaktionszeit wird das ausgefallene Produkt abfiltriert (242,6 g).

Das Lösungsmittel kann mehrmals zur Extraktion zurückgeführt werden, bevor es destillativ aufgearbeitet werden muß. Der pechartige Destillationsrückstand wird als Imprägniermittel verwendet oder zu hochwertigem Bindemittelfür Kohlenstoff-Formkörper aufgearbeitet.

Der Filtrationsrückstand wird in 10 kg Chloroform aufgeschlämmt und viermal mit je 2 l 15 %iger wäßriger Ammoniaklösung behandelt. Nach Abtrennen der wäßrigen Phase und Abdestillieren des Chloroforms werden 189,6 g einer hochreaktiven Pechfraktion gewonnen. Dieses Produkt wird auf eine Temperatur von 425 °C erhitzt und unter einem Druck von 3 bar in einer Zeit von 80 Minuten verkokt. Es wird in 86 %iger Ausbeute ein Koks mit großflächig anisotroper Kristallstruktur, einem Flüchtigengehalt von 8,3 % und einer wahren Dichte von 2,179 g/cm$^3$ des bei 1 300 °C kalzinierten Kokses erhalten.

Vergleichsbeispiel

1 kg Steinkohlenteernormalpech mit einem Erweichungspunkt von 72 °C (nach Krämer-Sarnow) wird mit 50 kg siedendem Toluol unter Rühren extrahiert. Die Lösung wird auf Raumtemperatur abgekühlt und das Unlösliche (199 g) abfiltriert. Dem in Toluol gelöstem Pech werden in einem Rührwerk bei Raumtemperatur 40 g Pikrinsäure in 1,25 kg Toluol gelöst zugegeben. Nach 30 Minuten Reaktionszeit wird das ausgefallene Produkt abfiltriert (117 g).

Der Filtrationsrückstand wird wie im Beispiel in 10 kg Chloroform aufgeschlämmt und mit einer 15 %igen wäßrigen Ammoniaklösung behandelt. Nach Abtrennen der wäßrigen Phase und Abdestillieren des Chloroforms werden 98 g einer hochreaktiven Pechfraktion gewonnen. Dieses Produkt wird auf eine Temperatur von 425 °C erhitzt und unter einem Druck von 10 bar in einer Zeit von 70 Minuten verkokt. Es wird in 88 %iger Ausbeute ein Koks mit großflächig anisotroper Kristallstruktur, einem Flüchtigengehalt von 8 % und einer wahren Dichte von 2,178 g/cm³ erhalten.

Wie das Vergleichsbeispiel zeigt, ist die Ausbeute an hochreaktivem Pech nach dem Pikrinsäureverfahren nur etwa halb so groß wie nach dem erfindungsgemäßen Verfahren.

## Patentansprüche

1. Verfahren zur Herstellung einer hochreaktiven Pechfraktion aus einer durch Extraktion gewonnenen Steinkohlenteerpechlösung, dadurch gekennzeichnet, daß der in Chloroform lösliche Steinkohlenteerpechextrakt mit 1-10 Gew.-% festem Jod 1 bis 3 Stunden unter Rühren bei Raumtemperatur behandelt wird, die festen Reaktionsprodukte abgetrennt und in Gegenwart von Chloroform mit einer wäßrigen Ammoniaklösung zerlegt werden, und nach Abtrennen der wäßrigen Phase und Abdestillieren des Lösungsmittels in an sich bekannter Weise die hochreaktive Pechfraktion als Rückstand verbleibt.

2. Verfahren nach Anspruch 1, dadurch gekennzeichnet, daß das beladene Chloroform nach der Jod-behandlung und Abtrennen der festen Reaktionsprodukte zumindest teilweise wieder zur Extraktion des Steinkohlenteerpechs verwendet wird.

3. Verfahren nach Anspruch 1, dadurch gekennzeichnet, daß das beladene Chloroform nach der Jod-behandlung und Abtrennen der festen Reaktionsprodukte zumindest teilweise destillativ aufgearbeitet wird und die Destillationsrückstände zu Elektrodenbinde- und -imprägniermittel verarbeitet werden.

4. Verwendung der nach Anspruch 1 erhaltenen Pechfraktion zur vorzugsweise kontinuierlichen Herstellung von hochanisotropem Kohlenstoff bei Temperaturen von 425 °C und höher, unter Drücken von 1 bis 10 bar in 1 bis 2 Stunden.

## Claims

1. A method for producing a highly reactive pitch fraction from a coal-tar pitch extract, soluble in chloroform, with 1 to 10 % by weight of solid iodine for 1 to 3 hours with agitation at room temperature, separating the solid reaction products and decomposing said products in the presence of chloroform with an aqueous solution of ammonium, and after separation of the aqueous phase and removal of the solvent by distillation in a known manner, recovering the highly reactive pitch fraction as a residue.

2. A method according to claim 1, characterised by at least partially reusing the chloroform after the treatment with iodine and separation of the solid reaction products for extracting the coal-tar pitch.

3. A method according to claim 1, characterised by at least partially reprocessing the chloroform by distillation after the treatment with iodine and separation of the solid reaction products and processing the distillation residues into electrode binding and impregnation agents.

4. The use of the pitch fraction obtained in claim 1 for the preferently continuous production of highly anisotropic carbon at temperatures of 425 °C or more at pressures of 1 to 10 bar during 1 to 2 hours.

## Revendications

1. Procédé de préparation d'une fraction de brai hautement active à partir d'une solution de brai de goudron de houille obtenue par extraction, caractérisé par le fait que l'extrait de brai de goudron de houille soluble dans le chloroforme est traité avec 1 à 10 % en poids d'iode solide pendant 1 à 3 heures sous agitation à la température ambiante, que les produits solides de la réaction sont séparés et décomposés en présence de chloroforme à l'aide d'une solution aqueuse d'ammoniaque et qu'après séparation de la phase aqueuse et élimination par distillation du solvant de manière en soi connue, il reste, en tant que résidu, la fraction de brai hautement réactive.

2. Procédé selon la revendication 1, caractérisé par le fait que le chloroforme introduit est au moins partiellement réutilisé pour l'extraction du brai de goudron de houille après le traitement à l'iode et la séparation des produits solides de la réaction.

3. Procédé selon la revendication 1, caractérisé par le fait que le chloroforme introduit est au moins partiellement purifié par distillation et que les résidus de distillation sont transformés en agents liants et en agents d'imprégnation pour électrodes, ceci après le traitement à l'iode et la séparation des produits solides de la réaction.

4. Application de la fraction de brai obtenue conformément à la revendication 1, pour la fabrication, de préférence en continu, de carbone hautement anisotrope à des températures de 425 °C et plus, sous des pressions de 1 à 10 bars en 1 à 2 heures.